# EUROPÄISCHE PATENTSCHRIFT

(11) **EP 2 295 955 B1**
(45) Veröffentlichungstag und Bekanntmachung des Hinweises auf die Patenterteilung: **06.07.2016**
(21) Anmeldenummer: 10009516.5
(22) Anmeldetag: 13.09.2010
(51) Int. Cl.: G01N 21/94, G01N 21/88, G01N 21/89

(54) **Partikeldetektor und Verfahren zur Detektion von Partikeln**
Particle detector and method for detecting particles
Détecteur de particules et procédé de détection de particules

(30) Priorität: 11.09.2009 DE 102009041268
(43) Veröffentlichungstag der Anmeldung: 16.03.2011
(73) Patentinhaber: Fraunhofer-Gesellschaft zur Förderung der angewandten Forschung e.V., 80686 München (DE)
(72) Erfinder: Grimme, Ralf, Dipl.-Ing. (FH), 74385 Pleidelsheim (DE)
(74) Vertreter: Pfenning, Meinig & Partner mbB

(56) Entgegenhaltungen:
- WO-A1-96/25659
- DE-A1- 19 912 500
- DE-C2- 19 716 264
- US-A- 4 402 607
- US-A- 4 849 645
- US-A- 4 875 780
- US-A- 4 898 471
- US-A- 5 604 585
- US-A1- 2001 017 694
- US-A1- 2006 238 753
- US-B1- 6 208 750

## Beschreibung

Die Erfindung betrifft einen Partikeldetektor zur Detektion von Partikeln auf einer Oberfläche, mit dem Licht in einem flachen Winkel über die Oberfläche strahlbar ist und durch die Partikel gestreutes Licht detektierbar ist. Die Erfindung betrifft außerdem ein entsprechendes Verfahren zur Detektion von Partikeln.

Viele technische (raue) Oberflächen müssen einen hohen partikulären Reinheitsgrad aufweisen, damit bei ihrer Herstellung und Verarbeitung keine Fehlstellen entstehen, die zu Qualitätseinbußen oder Funktionsverlusten führen.

Dies ist z.B. bei der Beschichtung von Folien und Blechen der Fall. Vor allem bei der Aufbringung von sehr dünnen Schichtdicken verschärfen sich die Reinheitsanforderungen.

Aber auch im Bereich der Solar- und Bildschirmtechnik müssen großflächige Substrate aus z.B. Silizium oder Glas mit hoher Reinheit hergestellt und verarbeitet werden. Hier stören kleinste Verunreinigungen und führen zu Qualitäts- und Leistungseinbußen.

Da bei diesen Anwendungen einzelne Partikel im µm-Bereich auf zum Teil sehr großen Oberflächen (mehrere Quadratmeter) bereits zum Problem werden können, ist es vorteilhaft, die Gesamtflächen vollständig hinsichtlich ihrer partikulären Reinheit zu überprüfen und gegebenenfalls vor einer Weiterverarbeitung erneut zu reinigen.

Die Erfassung von kleinen Partikeln im µm-Bereich erfordert allerdings hochauflösende Messmethoden, die den Nachteil haben, dass in der Regel nur ein sehr kleiner Teil der Oberfläche untersucht werden kann und ein hoher technischer, finanzieller und zeitlicher Aufwand nötig ist. Eine 100%-Reinheitsprüfung von rauen technischen Oberflächen ist derzeit nicht oder nur in Teilaspekten fertigungsintegriert möglich.

In der Regel wird deshalb versucht, mit präventiven Maßnahmen Verunreinigungen von Oberflächen zu vermeiden. Hierzu werden beispielsweise Reinräume eingesetzt, die eine Kontamination vermeiden. Sofern Reinigung durchgeführt wird, ist diese normalerweise mit einem übermäßigen Aufwand verbunden, da der Reinheitsgrad nur stichprobenhaft geprüft werden kann. Eine lokale partikuläre Kontamination kann dennoch nicht vollständig ausgeschlossen werden.

Eine Möglichkeit zur Lösung des Problems nach dem Stand der Technik besteht in der Verwendung von Oberflächenscannern. Diese werden z.B. in der Halbleitertechnik angewandt. So wird beispielsweise in einem Streulichtscanner mittels einem fokussiertem Laserstrahl eine Oberfläche eines zu untersuchenden Wafers beleuchtet. Das im beleuchteten Bereich entstehende Streulicht wird mittels Optik gesammelt und auf einen Lichtsensor fokussiert. Befindet sich kein Partikel im Messbereich, entsteht weniger Streulicht als mit Partikel. Aufgrund der erfassten Streulichtintensität wird auf eine Partikelgröße geschlossen. Damit die gesamte Waferoberfläche geprüft werden kann, wird der Wafer abgescannt. Aufgrund der starken Fokussierung des Lasers und der Sammlung des Streulichts aus einem großen Raumwinkel, können diese Geräte Partikel im nm-Bereich erfassen. Der Messpunkt muss hierbei allerdings sehr klein sein (Durchmesser ca. 30 µm). Die Messung ist weitgehend automatisiert dauert aber dennoch bis zu einer Minute pro Wafer. Derartige Geräte sind im Allgemeinen sehr teuer. Darüberhinaus sind sie wegen des steilen Beleuchtungswinkels nur für spiegelglatte Waferoberflächen geeignet. An rauen Flächen würde viel Untergrundstreulicht entstehen, welches das Streulicht von den Partikeln überlagern würde. Außerdem wird der Wafer in der Vorrichtung seriell abgetastet, was wegen des sehr kleinen Messfeldes nur mit einem vergleichsweise geringen Flächendurchsatz möglich ist.

Andere Lösungen nach dem Stand der Technik basieren auf Bildverarbeitung. Solche Verfahren werden beispielsweise in der Papierherstellung verwendet. Für die Oberflächeninspektion von Bahnwaren, wie Papier, Folien und Bleche, sind viele Systeme am Markt erhältlich, welche mittels Hochgeschwindigkeitskameras (Zeilenkameras) ein Bild der zu untersuchenden Oberfläche aufnehmen und diese dann nach abweichenden Merkmalen untersuchen. In der Regel ist hierzu ein messbarer Kontrast zwischen dem zu untersuchenden Material und den Fehlstellen bzw. den zu erfassenden Fremdstoffen notwendig. Bei transparenten Materialien kommen oftmals Durchlichtaufbauten, bei undurchsichtigen Materialen Auflichtbeleuchtungen zum Einsatz. Je nach zu erreichender Auflösung und Breite der zu untersuchenden Oberfläche werden mehrere Zeilenkameras in Reihe geschaltet. Da bei dieser Art der Inspektion viele Daten auflaufen, müssen sehr leistungsfähige Rechner eingesetzt werden, welche mit angepassten Algorithmen die Bilddaten analysieren. Nachteilig sind auch bei diesem System die hohen Kosten, die durch die Verwendung der teuren Zeilenkameras mit angepassten Objektiven, den Rechner und die Vorrichtung zur Erzeugung einer homogenen Beleuchtung entstehen. Darüberhinaus ist das Verfahren nur anwendbar, wenn die zu detektierenden Partikel einen Kontrast gegenüber der Oberfläche bilden. So sind beispielsweise Stahlpartikel auf Stahl kaum erfassbar. Es muss darüberhinaus die Beleuchtungssituation exakt auf zu erfassende Fehler und Oberflächen eingestellt werden.

Ein System nach dem Stand der Technik wird in der US 5 604 585 beschrieben.

Ein weiteres System nach dem Stand der Technik wird in der DE 197 16 264 C2 beschrieben. Dieses Verfahren wurde entwickelt, um partikuläre Verunreinigungen auf rauen technischen Oberflächen automatisch erfassen zu können. Die Grundlage des Verfahrens stellt eine streifende Beleuchtung der zu untersuchenden Oberfläche mittels parallelem Licht dar. Die Verwendung von parallelem Licht (mit homogener Intensitätsverteilung) ist hierbei sehr wichtig, da hierdurch erreicht wird, dass alle Strukturen der Oberfläche dieselbe Lichtmenge streuen. Hierdurch entsteht ein homogen schwach ausgeleuchteter Untergrund. Befinden sich Partikel auf diesem Untergrund werden diese vom streifenden Licht stark angestrahlt und es entsteht viel Streulicht. Eine Kamera mit Objektiv nimmt, entsprechend der gewünschten Auflösung des Messsystems, von einem Teilbereich der Oberfläche ein Bild auf. In diesem Bild sind helle Partikel auf dunklem Hintergrund zu erkennen. Mittels Bildverarbeitungsmethoden können durch die Festlegung einer Helligkeitsschwelle (Binarisierung) die hellen Partikel einfach vom dunklen Hintergrund getrennt werden. Die hellen Stellen werden geometrisch vermessen und somit die erfassten Partikelgröße und deren Lage angegeben. Ist der Hintergrund nicht homogen ausgeleuchtet, wird die Trennung von Hintergrund und Partikeln schwierig bis unmöglich. Die Messfläche kann nicht beliebig vergrößert werden, da der Aufwand der Herstellung einer homogenen Streiflichtbeleuchtung über den gesamten Bildbereich immer aufwändiger wird. Zusätzlich müssen hochauflösende Kameras und entsprechend aufwändige Objektive eingesetzt oder erst entwickelt werden. Nachteilig an diesem Verfahren ist, dass es verhältnismäßig langsam ist, da Flächenuntersuchungen nur durch Aneinanderreihung von einzelnen Bildern erfolgen. Auch die Auswertung ist langsam, da aufwendige Bildverarbeitungsroutinen ablaufen müssen, die segmentieren und vermessen. Das Verfahren ist außerdem nicht beliebig in der Fläche und Auflösung einstellbar, sondern abhängig von verfügbaren Kameras und passenden Objektiven. Spezialentwicklungen sind sehr teuer. Hinzu kommt, dass die Schärfentiefe gering ist und das Messsystem daher fixiert werden muss. Die homogene Beleuchtung von Oberflächen ist Voraussetzung und für große Flächen nur mit sehr hohem Aufwand zu realisieren.

Neben der schlechten Verfügbarkeit der nötigen Kameras und der passenden Objektive besteht darüberhinaus das Problem aller abbildenden Messmethoden. Für die Erfassung kleiner Partikel ist eine hohe Auflösung und Vergrößerung der optischen Systeme erforderlich. Hierdurch verringert sich das Messfeld jedoch enorm, bei 10-facher Vergrößerung ist das Messfeld z.B. nur noch 0,8 x 0,6 mm groß. Zusätzlich wird die Schärfentiefe und der Arbeitsabstand der stark vergrößernden Optiken immer geringer (µm-Bereich). Die geringe Schärfentiefe und der geringe Arbeitsabstand erfordert die exakte Positionierung des Messkopfs was in Fertigungsmaschinen nur mit hohem Aufwand realisierbar ist.

Aufgabe der vorliegenden Erfindung ist es, die oben beschriebenen Nachteile des Standes der Technik zu überwinden. Insbesondere soll vorteilhafterweise ein universal anwendbares Verfahren entwickelt werden, welches auf fast allen Untergründen auch für eine Inline-Kontrolle kostengünstig anwendbar ist. Es sollte außerdem der Arbeitsabstand des Detektors von der Oberfläche, auf welcher Partikel zu detektieren sind, möglichst frei wählbar sein und idealerweise Komponenten verwendbar sein, die auf dem Markt verfügbar sind. Es sollte eine gleichbleibende Detektionscharakteristik über eine zu vermessende Oberfläche erreicht werden und der Partikeldetektor einfach an die zu vermessende Oberfläche sowie die zu überwachende Partikelkonzentration anpassbar sein. Es sollten möglichst große Oberflächen bei gleichzeitig hoher Auflösung vermessbar sein und eine geringe Empfindlichkeit gegen Änderung der Schärfentiefe bestehen. Die Partikel sollten vorteilhafterweise mit einer einfachen Signalverarbeitung detektierbar sein, so dass auch großflächige Substrate schnell abscannbar sind und das Verfahren inlinefähig ist. Es sollten außerdem eine Vielzahl von Materialien untersuchbar sein und insbesondere auch Partikel ohne Kontrast zum Untergrund erfassbar sein. Die Detektion sollte außerdem möglichst kostengünstig durchführbar sein.

Die Aufgaben werden gelöst durch den Partikeldetektor nach Anspruch 1 sowie das Verfahren zum Detektieren von Partikeln nach Anspruch 14. Die jeweiligen abhängigen Ansprüche geben vorteilhafte Weiterbildungen des erfindungsgemäßen Partikeldetektors und des erfindungsgemäßen Verfahrens zum Detektieren von Partikeln an.

Erfindungsgemäß wird ein Partikeldetektor zur Detektion von Partikeln auf einer Oberfläche bereitgestellt. Der Partikeldetektor weist zumindest eine Lichtquelle, zumindest einen Detektor zur Detektion von Licht sowie zumindest einen Lichtkollektor auf. Hierbei weist der Lichtkollektor eine Vielzahl von Lichtleitfasern auf, die so angeordnet sind, dass je eine Eingangsstirnfläche je einer Lichtleitfaser der zu vermessenden Oberfläche so gegenüber anordenbar ist, dass Licht, welches aus Richtung der Oberfläche strahlt, auf die entsprechende Eingangsstirnfläche zumindest einer Lichtleitfaser fallen kann.

Die jeweils andere Stirnfläche der Lichtleitfasern grenzt so an den Detektor, dass aus dieser Stirnfläche austretendes Licht mit dem Detektor detektierbar ist.

Der Partikeldetektor ist erfindungsgemäß so ausgestaltet, dass durch die Lichtquelle erzeugtes Licht in einem solchen Winkel zur Oberfläche über die Oberfläche strahlbar ist, dass durch die Oberfläche selbst reflektiertes Licht nicht auf die der Oberfläche gegenüber angeordneten Eingangsstirnflächen der Lichtleitfasern trifft oder auf diese Eingangsstirnflächen in einem Winkel trifft, der außerhalb eines Akzeptanzwinkels der Lichtleitfaser liegt.

Unter einem Akzeptanzwinkel einer Lichtleitfaser wird der maximale Winkel um eine Senkrechte auf der Stirnfläche der Faser verstanden, in dem Licht auf die Stirnfläche treffen darf, damit es durch die Lichtleitfaser noch geleitet wird. Trifft das Licht in einem größeren Winkel ein (flacher auf der Stirnfläche), so wird es nicht geleitet.

Dass Licht über die Oberfläche strahlbar ist, bedeutet, dass die Lichtstrahlen im zu vermessenden Bereich, d.h. dem Messbereich, parallel zur Oberfläche verlaufen oder einen spitzen Winkel mit der Oberfläche einschließen, der vorteilhafterweise ≤ 15°, besonders bevorzugt ≤ 10°, besonders bevorzugt ≤ 5° ist. Der für die Beleuchtung gegenüber der Oberfläche gewählte Winkel hängt u.a. von der Rauheit der zu untersuchenden Oberfläche ab. Flache Winkel sind hierbei vorteilhaft, da in diesem Fall weniger Streulicht an der Oberfläche erzeugt wird.

Jenes durch die Oberfläche reflektierte Licht im Sinne der Erfindung ist Licht, welches nicht durch Partikel auf der Oberfläche reflektiert wird, sondern durch die Oberfläche selbst. Dieses Licht wird also in einer Reflexionsebene reflektiert, die dort, wo ein Lichtstrahl oder das Licht auf die Oberfläche trifft, tangential zur Oberfläche in diesem Ort bzw. Punkt liegt.

Das Licht wird durch die Oberfläche selbst in diesem Sinne dann so reflektiert, dass es nicht in die Eingangsstirnflächen der Lichtleitfaser eintritt, sei es, weil es nicht auf die Eingangsstirnfläche trifft oder weil es in einem Winkel auf sie trifft, der größer ist als der Akzeptanzwinkel (gemessen zu einer Achse senkrecht auf der Oberfläche der Eingangsstirnfläche).

Trifft nun das über die Oberfläche gestrahlte Licht auf einen Partikel auf der Oberfläche, so wird es in Richtungen reflektiert, welche von der Einfallsrichtung des Lichts abweichen, welches durch die Oberfläche selbst reflektiert wird. Ein bestimmter Anteil des Lichts wird in Richtung der Eingangsstirnflächen der Lichtleitfasern gestreut. Sofern es unter einem Winkel auf diese Stirnflächen trifft, der kleiner als der Akzeptanzwinkel ist, wird er zum Detektor geleitet.

Licht, welches von einem Partikel in Richtung der Stirnflächen gestreut wird, trifft normalerweise auf mehrere Lichtleitfasern. Aufgrund der Apertur der Lichtleitfasern wird jedoch nur Licht aus einem bestimmten Raumwinkelbereich (dem Akzeptanzwinkel) aufgenommen und zum Detektor weitergeleitet. In einem flacheren Winkel zur Stirnfläche gestreutes Licht wird nicht registriert. Es lässt sich also das durch eine Faser detektierte Licht auf einen Entstehungsort zurückverfolgen, an welchem das streuende Partikel liegt.

Befinden sich keine Partikel auf der zu untersuchenden Oberfläche, so wird nur wenig Licht in Richtung des Kollektors bzw. der Eingangsstirnflächen, welche der Oberfläche gegenüber angeordnet sind, gestreut.

Ein Partikel hingegen streut das Streiflicht sehr stark. Das gestreute Licht wird vom Kollektor erfasst und zum Detektor geleitet. Der Detektor wandelt die Lichtimpulse in elektrische Signale um. Durch die Auswertung der Impulshöhe kann dabei auf die Größe des erfassten Partikels geschlossen werden.

Es ist bevorzugt, wenn jene der zu untersuchenden Oberfläche gegenüber anordenbaren Eingangsstirnflächen der Lichtleitfasern auf einer gemeinsamen Fläche oder in einer gemeinsamen Ebene angeordnet sind.

Bevorzugterweise sind die Eingangsstirnflächen der Lichtleitfasern mit ihrer Fläche parallel zur zu untersuchenden Oberfläche anordenbar. Bei einer solchen Anordnung sollte der Winkel, mit welchem das Licht auf die Oberfläche trifft, kleiner als der kritische Winkel der Eingangsstirnfläche sein, wenn dieser kritische Winkel zwischen der Oberfläche der Eingangsstirnfläche und der Lichteinfallsrichtung gemessen wird (also sollte der Winkel größer als der Akzeptanzwinkel sein). Auf diese Weise tritt durch die Oberfläche selbst reflektiertes Licht nicht in die Lichtleitfaser ein.

Besonders bevorzugt ist es, wenn die Eingangsstirnflächen der Lichtleitfasern in einem Rechteck aneinander angrenzend angeordnet sind. Die Eingangsstirnflächen füllen in diesem Falle also eine rechteckige Fläche aus und grenzen jeweils aneinander.

Die Lichtquelle ist so ausgestaltet, dass mit ihr ein rechteckiges Strahlbündel erzeugbar ist. Die rechteckige Form liegt hierbei in einer Ebene senkrecht zur Ausbreitungsrichtung bzw. Hauptstrahlrichtung des Strahlbündels vor.

Bevorzugterweise ist das Rechteck in einer Richtung breiter ausgedehnt als in der hierzu senkrechten Richtung, so dass der Querschnitt des Strahlbündels die Form eines Streifens hat. Mit einem solchen Strahlbündel lässt sich auf der zu untersuchenden Oberfläche ein streifenförmiger Bereich beleuchten. In diesem Fall können vorteilhafterweise die Eingangsstirnflächen innerhalb eines Rechtecks angeordnet sein, welches dann über dem ausgeleuchteten Streifen auf der Oberfläche anordenbar ist und vorteilhafterweise solche Abmessungen hat, dass die Länge des Stirnflächenrechtecks im Wesentlichen gleich der Länge des ausgeleuchteten Streifens oder Rechtecks ist und/oder die Breite des Stirnflächenrechtecks im Wesentlichen gleich der Breite des ausgeleuchteten Bereichs ist.

Bevorzugterweise lassen sich mit dem erfindungsgemäßen Partikeldetektor auch sehr kleine Partikel auf Oberflächen reproduzierbar messen. Hierzu wird vorteilhafterweise möglichst viel des an den Partikeln gestreuten Lichtes erfasst und bevorzugt die Partikelgröße reproduzierbar erfasst.

Um möglichst viel des an den Partikeln auf der Oberfläche gestreuten Lichtes erfassen zu können, werden bevorzugt die Fasern möglichst dicht über der Oberfläche, vorzugsweise mit einem Abstand ihrer Stirnflächen von ≤ 10 mm, besonders bevorzugt ≤ 5 mm, oder noch näher, positioniert. Auf diese Weise gelangt ein großer Anteil des an den Partikeln gestreuten Lichtes direkt in die Faser, ohne dass Licht sammelnde Linsen benötigt werden, die den Detektor teurer machen würden.

Um die Partikel besser reproduzierbar erfassen zu können und insbesondere kleine Partikel reproduzierbar messen zu können, ist es vorteilhaft, wenn ein gegebenes Teilchen beim Passieren des Sensors immer mit demselben Streulichtimpuls bzw. derselben Streulichtintensität erfasst wird. Hierbei ist es besonders bevorzugt, dass immer mehrere Fasern gestaffelt bzw. geschichtet nebeneinander angeordnet sind. Dadurch wird vom zu erfassenden Partikel unabhängig von dessen Position relativ zum Sensor immer dasselbe Streulichtsignal erfasst. Außerdem wird die Aufenthaltsdauer eines Partikels unterhalb des Detektors erhöht, wodurch ein lang gestrecktes Signal erzeugt wird, welches von der Elektronik leichter mehrfach abgetastet werden kann, um das Peak-Maximum sicher zu erfassen. Auch die sichere Erfassung des Peak-Maximums trägt zur reproduzierbaren Messung der Partikel bei.

Besonders bevorzugt weist also der Detektor mehrere Lagen nebeneinander angeordneter Lichtleitfasern auf. Sind wie oben beschrieben die Eingangsstirnflächen der Lichtleitfasern in einem Rechteck aneinander angrenzend angeordnet, so sind hier also vorteilhaft in beiden Dimensionen mehrere Fasern nebeneinander angeordnet. Ist beispielsweise in dem Rechteck eine Richtung breiter ausgedehnt als die hierzu senkrechte Richtung, so können in der breiten Richtung eine Vielzahl von Stirnflächen nebeneinander angeordnet sein, während in der hierzu senkrechten schmaleren Richtung mindestens zwei, vorzugsweise drei, besonders bevorzugt vier sich in der breiteren Richtung erstreckende Reihen nebeneinander angeordnet sind. Besonders bevorzugt ist es, wenn die Lichtleitfasern in zumindest einer Richtung, vorzugsweise der schmaleren Richtung, jeweils so gegeneinander verschoben sind, dass die Mitte der Fasern einer Lage bei Aufsicht auf die Fläche des Rechtecks in Projektion in eine der Richtungen des Rechtecks zwischen den Mitten der Fasern der benachbarten Lagen liegen.

Es ist für die vorliegende Erfindung nicht notwendig, dass das Lichtbündel parallel verläuft. Ein divergentes Lichtbündel, welches sich in zumindest einer Raumrichtung aufspreizt, ist bevorzugt, da hierdurch ein breiter Messbereich realisiert werden kann. Der Grad der Aufspreizung richtet sich vor allem nach der gewünschten Breite des Messbereichs, in welchem Partikel detektiert werden können.

Ist die durch die Eingangsstirnflächen gebildete Fläche streifenförmig, so sind vorzugsweise in der schmalen Richtung des Streifens im Kollektor mehrere Stirnflächen nebeneinander angeordnet. Von einem Partikel auf der Oberfläche ausgehendes Streulicht wird bei Bewegung des Kollektors gegenüber der Oberfläche in Richtung der schmalen Ausdehnung der Lichtaufnahmefläche des Kollektors in diesem Falle von mehreren Fasern erfasst. Hierdurch wird erreicht, dass das gesamte am Partikel entstehende Streulicht eine Zeitlang erfasst wird. Auf diese Weise kann aus der Höhe eines im Detektor detektierten Signals eindeutig auf eine Größe des entsprechenden Partikels geschlossen werden.

Vorzugsweise werden alle Lichtleitfasern durch den gleichen Detektor ausgewertet. Es ist aber auch möglich, dass jeweils Gruppen der Lichtleitfasern durch einen gemeinsamen Detektor ausgewertet werden oder dass jede Lichtleitfaser durch einen einzelnen Detektor ausgewertet wird.

Lichtquellen können z.B. Zeilenlaser oder Linienlaser sein. Die Lichtquelle erzeugt vorzugsweise in einem Messbereich, aus welchem Licht durch Partikel auf die Stirnflächen der Lichtleitfasern reflektiert wird, eine homogene Beleuchtungsintensität.

Im Allgemeinen haben geeignete Lichtquellen Abmessungen, die es u.U. schwierig machen, die Lichtquelle so über der zu untersuchenden Oberfläche anzuordnen, dass Licht direkt im geeigneten Winkel aus der Lichtquelle über oder auf die Oberfläche strahlbar ist. Eine direkte Einstrahlung ist eventuell bei flexiblen Oberflächen möglich, wenn die Oberfläche so gebogen wird, dass die Lichtquelle entsprechend dicht über der Oberfläche anordenbar ist.

Insbesondere für feste, nicht-biegbare Oberflächen ist es jedoch bevorzugt, wenn zwischen Lichtquelle und bestrahlter Oberfläche zumindest ein Umlenkspiegel angeordnet ist, über welchen das Licht aus der Lichtquelle in oben beschriebener Weise über die Oberfläche strahlbar ist. Da ein solcher Spiegel mit geringen Abmessungen realisiert werden kann, lässt sich auf diese Weise ein beinahe beliebig flacher Winkel erzeugen, auch dann, wenn die Oberfläche nicht biegbar ist und so ausgedehnt ist, dass eine direkte Einstrahlung vom Rand der Oberfläche schwierig oder unmöglich wäre.

Es ist bevorzugt, wenn die Lichtleitfasern des Kollektors gebündelt sind und/oder miteinander verbunden sind. Die Lichtleitfasern grenzen in diesem Falle also über ihre gesamte Länge unmittelbar aneinander an. Besonders bevorzugt verlaufen dabei die Lichtleitfasern unmittelbar hinter den Eingangsstirnflächen und/oder hinter jenen Stirnflächen, die an den Detektor grenzen, parallel zueinander. Im Bereich zwischen den Stirnflächen können die Glasfasern so geführt sein, dass der Kollektor auf seiner der zu untersuchenden Oberfläche gegenüber anordenbaren Seite einen anderen durch die Stirnflächen der Lichtleitfasern gebildeten Querschnitt hat als an jener dem Detektor zugewandten Seite. Hierbei ist es besonders bevorzugt, wenn der Kollektor auf jener der Oberfläche gegenüber anordenbaren Seite einen rechteckigen oder streifenförmigen Querschnitt wie oben beschrieben hat, während er auf seiner dem Detektor zugeordneten Seite einen der Detektorapertur entsprechenden Umriss bzw. Querschnitt, hat beispielsweise einen kreisförmigen.

Mit dem Detektor können Partikel ≤ 10 µm, besonders bevorzugt ≤ 5 µm, besonders bevorzugt ≤ 2 µm, besonders bevorzugt ≤ 0,8 µm detektiert werden.

Der Kollektor sollte vorzugsweise über seine gesamte Abmessung oder Breite auf jener der Oberflächen gegenüber anordenbaren Seite eine homogene Sammelcharakteristik aufweisen. Bevorzugt wird daher die Anzahl jener der Oberfläche gegenüber anordenbaren Stirnflächen pro Fläche so gewählt, dass sie der Anzahl von erwarteten, zu detektierenden Partikeln pro Fläche entspricht, also gleich oder ungefähr gleich zu dieser ist. Es befindet sich dann im Durchschnitt nur ein Partikel im Messfeld je einer Lichtleitfaser. Da das Messsystem für die Kontrolle reiner Oberflächen eingesetzt werden soll, ist dies möglich.

Die Lichtleitfasern haben vorzugsweise einen Aperturwinkel (Akzeptanzwinkel) von ≤ 90°, besonders bevorzugt ≤ 60°, besonders bevorzugt ≤ 50°, besonders bevorzugt ≤ 30°, besonders bevorzugt ≤ 20°. Der Aperturwinkel ist hierbei jener Winkel um die optische Achse, aus welchem Licht, welches auf die Stirnfläche trifft, in die Lichtleitfaser eintreten kann. Tritt Licht unter einem größeren Winkel ein (gemessen zwischen Lichteinfallsrichtung und optischer Achse), so wird es von der Faser nicht geleitet.

Als Lichtleitfasern kommen z.B. Glasfasern in Frage.

Als Detektor kommt beispielsweise ein Photomultiplier oder Photodioden in Frage.

Vorzugsweise ist der Partikeldetektor oder die Eingangsstirnflächen gemeinsam parallel relativ zur Oberfläche bewegbar, wobei der Partikeldetektor, die Lichtleitfasern, der Kollektor und/oder die Oberfläche bewegt werden können. Für diesen Fall ist es besonders bevorzugt, wenn die Eingangsstirnflächen der Lichtleitfasern in einem Bereich angeordnet sind, der in Richtung der Bewegung schmaler ist als in Richtung senkrecht zur Bewegung, also eine Streifenform hat, wobei der Streifen mit seiner Längsrichtung senkrecht zur Bewegungsrichtung orientiert ist. Die zu untersuchende Oberfläche kann mit einer Geschwindigkeit ≥ 1 m/min, besonders bevorzugt ≥ 3 m/min, besonders bevorzugt ≥ 6 m/min gegenüber dem Detektor bewegt werden.

In einer bevorzugten Ausführungsform ist der Partikeldetektor bzw. die Eingangsstirnflächen der Lichtleitfasern so über der Oberfläche anordenbar, dass eine optische Achse der Lichtquelle und/oder des zumindest einen Umlenkspiegels oder einer anderen optischen Anordnung zur Ablenkung des Lichts über die Oberfläche die Oberfläche in einem Punkt schneidet, welcher senkrecht unterhalb der Eingangsstirnflächen liegt. Die Stirnflächen liegen hierbei also senkrecht über dem ausgeleuchteten Bereich der Oberfläche. Ihre optische Achse schneidet vorzugsweise den ausgeleuchteten Bereich.

Der Detektor kann vorzugsweise als Baueinheit ausgeführt sein, welche Detektor, Lichtquelle und Umlenkspiegel enthält. Hierbei können Detektor und Lichtquelle mit zueinander parallelen optischen Achsen angeordnet sein. Vor der Lichtquelle kann der Umlenkspiegel, über welchen Licht über die Oberfläche gestrahlt wird, angeordnet sein. Der so ausgebildete Partikeldetektor kann dann selbst über die Oberfläche bewegt werden oder die Oberfläche wird unter dem Partikeldetektor bewegt, beispielsweise über Rollen, auf welchen die Oberfläche aufliegt.

Es sind selbstverständlich auch mehrere derartige Partikeldetektoren parallel betreibbar, die nebeneinander, also senkrecht zur Bewegungsrichtung nebeneinander, angeordnet sind.

Der erfindungsgemäße Detektor kann in einer Beschichtungsanlage frei positioniert werden. Er kann beispielsweise vor oder nach einem Reinigungsschritt oder nach der Beschichtung oder vor oder nach einem Trockner positioniert werden.

Der Partikeldetektor eignet sich besonders zur Reinheitsüberwachung von Oberflächen. Solche Oberflächen können beispielsweise Glasscheiben, Solarmodule, Blechbahnen, Papierbahnen, Lackflächen, Wafer oder andere sein. Anhand der Messergebnisse lassen sich Reinigungsanlagen steuern und eine Qualitätssicherung im Anschluss an Beschichtungen durch Beschichtungsanlagen durchführen.

Eine Kalibrierung der Messung des Partikeldetektors kann z.B. durch Vermessen von Oberflächen mit Partikeln bekannter Größe und Anzahl und/oder Verteilungsdichte auf der Oberfläche geschehen.

Optiken, die nicht Lichtleitfasern verwenden (wie beispielsweise herkömmliche Abbildungsoptiken oder Kunststofflichtleitkörper) verfälschen normalerweise die Streulichtintensität aufgrund der zur Abbildung verwendeten Strahlengänge in Abhängigkeit von der Position des streuenden Partikels. Aufgrund der gleich bleibenden Einkoppel- und Leitungseffizienz des Faserkollektors kann in der Erfindung eine gleich bleibende Detektionscharakteristik über die gesamte Messbreite erreicht werden. Hierdurch kann eine korrekte Größenmessung der Partikel erzielt werden. Die Breite des Kollektors ist beliebig konfektionierbar und einfach an Fläche und zu überwachende Partikelkonzentration anpassbar. Dies ist ein wichtiger Vorteil gegenüber Kameralösungen.

Es besteht außerdem eine geringe Empfindlichkeit gegen Schärfentiefeänderungen. Da der Kollektor das entstehende Streulicht sammelt und keine Abbildung erfolgt, wirken sich leichte Änderungen des Arbeitsabstandes des Messkopfs zur Oberfläche kaum aus. Deshalb kann der Messkopf ohne großen Aufwand in Fertigungsanlagen integriert werden.

Die Erfindung ermöglicht ein großes Messfeld bei gleichzeitig hoher Auflösung. Große Flächen können hinsichtlich partikulärer Kontaminationen im µm-Bereich im Fertigungstakt untersucht werden.

Da keine aufwändige Signalverarbeitung nötig ist, können großflächige Substrate schnell abgescannt bzw. Bänder mit hohen Geschwindigkeiten am Sensor vorbeigeführt werden (Inline-fähig).

Durch die streifende Beleuchtung der zu überprüfenden Oberflächen können eine Vielzahl von Materialien untersucht werden, da bei richtig gewählter Beleuchtung von der sauberen Oberfläche keine Signale erzeugt werden. Hierdurch ist das Verfahren sehr flexibel für viele Anwendungen einsetzbar. Zusätzlich kann durch einen in einer Dimension aufgespreizten Lichtstrahl eine große Fläche sehr einfach beleuchtet werden.

Es können Partikel ohne Kontrast zum Untergrund erfasst werden. Da aufgrund der Streiflichtbeleuchtung ein hoher Kontrast zwischen Partikel und Untergrund entsteht, können auch Partikel erfasst werden, welche aus demselben Material bestehen wie der Untergrund. Dies ist häufig der Fall, da z.B. beim Schneiden von Glasplatten auch Glaspartikel entstehen und auf dann auf dem Glassubstrat zu finden sind.

Der Detektor ist kostengünstig, da keine Kamera, kein teures Objektiv und keine aufwändige Bildverarbeitung benötigt werden. Vollflächige Untersuchungen von Bahnwaren können einfach realisiert werden.

Da das Streulicht nicht zur Abbildung genutzt wird, wirkt sich eine Abstandsänderung nur geringfügig aus, wenn dafür gesorgt ist, dass das Streulicht nicht am Kollektor vorbei strahlt (Aufbau des Kollektors aus mehreren Fasern unter Berücksichtigung von Arbeitsabstand und Apertur).

Im Folgenden soll der erfindungsgemäße Partikeldetektor anhand einiger Figuren beispielhaft erläutert werden. Es zeigt
- Figur 1: einen prinzipiellen Aufbau eines möglichen Partikeldetektors,
- Figur 2: gegenüber einer zu untersuchenden Oberfläche angeordnete Eingangsstirnflächen von Glasfasern,
- Figur 3: einen Kollektor, wie er im erfindungsgemäßen Partikeldetektor zur Anwendung kommen kann,
- Figur 4: einen möglichen Gesamtaufbau eines erfindungsgemäßen Partikeldetektors mit einer zu vermessenden Oberfläche, die über Umlenkrollen geführt wird, und
- Figur 5: eine Vermessungsanordnung, in welcher der erfindungsgemäße Partikeldetektor zum Scannen einer Oberfläche eingesetzt wird.

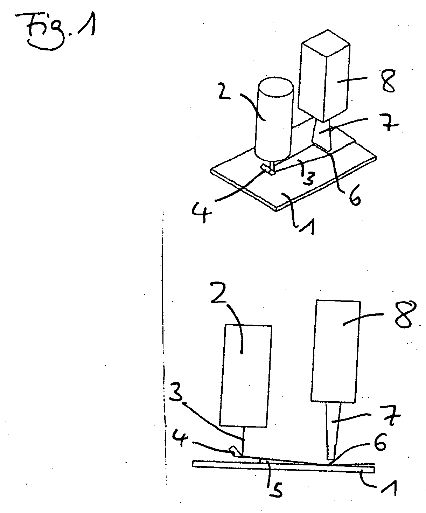

Figur 1 zeigt den grundsätzlichen Aufbau eines erfindungsgemäßen Partikeldetektors, der über einer zu vermessende Oberfläche 1 angeordnet ist. Der Partikeldetektor weist zumindest eine Lichtquelle 2 auf, mit welcher Licht 3 über einen Umlenkspiegel 4 über die Oberfläche 1 strahlbar ist. Das Licht wird hierbei in einem flachen Winkel 5, im Extremfall 0°, auf die Oberfläche 1 eingestrahlt, so dass es, wenn es an der Oberfläche reflektiert wird, nicht oder in einem Winkel, der größer ist als der Akzeptanzwinkel eines Kollektors, auf Eingangsstirnflächen des Kollektors 7 trifft. In einem Messbereich 6 wird nun Licht, das durch im Messbereich 6 vorhandene Partikel in Richtung eines Kollektors 7 gestreut wird, durch einen Detektor 8 detektiert. Das gestreute Licht trifft hierbei auf Eingangsstirnflächen von Glasfasern des Kollektors 7, die senkrecht über dem Messbereich 6 in einer Ebene angeordnet sind. Licht, welches in einem Winkel auf diese Stirnflächen auftrifft, der kleiner als der Akzeptanzwinkel ist, wird über die Lichtleitfasern des Kollektors 7 zum Detektor 8 geleitet, welcher beispielsweise ein Photomultiplier sein kann. Im gezeigten Beispiel sind die Lichtquelle 2 und der Detektor 8 mit parallelen optischen Achsen zueinander angeordnet und das Licht 3 wird über den Umlenkspiegel 4 in Richtung des Messbereichs 6 auf der Oberfläche 1 abgelenkt. Die Lichtquelle 2 kann beispielsweise ein Zeilenlaser oder ein Laserbarren sein und ein rechteckiges Strahlbündel erzeugen. Das von der Lichtquelle 2 ausgesandte Licht läuft in der Zeichenebene der unteren Teilfigur parallel. Es kann in einer Ebene senkrecht zur Zeichenebene der unteren Teilfigur divergent sein, was vorteilhaft ist, um größerflächige Messbereiche 6 auszuleuchten, die sich insbesondere weiter in Richtung senkrecht zur Zeichenebene ausdehnen. Die Lichtquelle 2 kann hierzu beispielsweise eine Aufweitungslinse aufweisen.

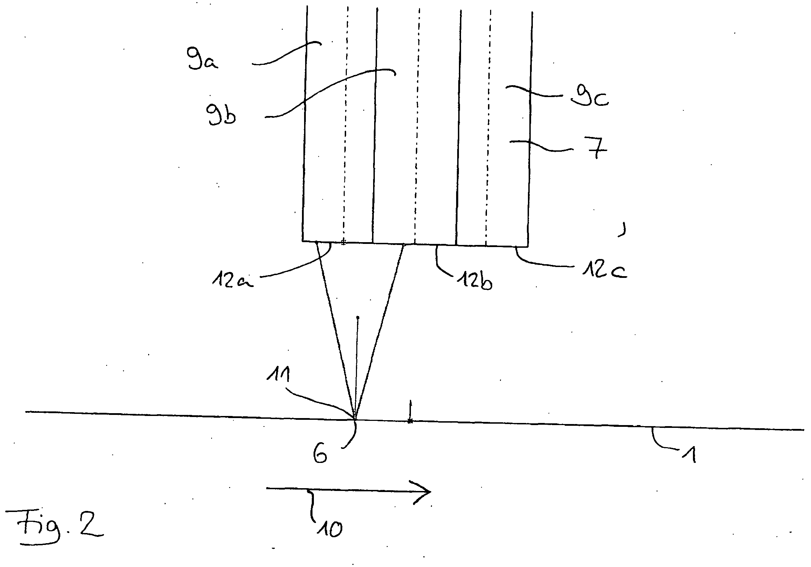

Figur 2 zeigt vergrößert ein der Oberfläche 1 zugewandtes Ende des Kollektors 7, der über dem Messbereich 6 der Oberfläche 1 angeordnet ist. Im gezeigten Beispiel liegen die Stirnflächen in Form eines Rechtecks bzw. eines Streifens angeordnet vor, wobei der Streifen eine Breite von drei Lichtleitfasern 9a, 9b, 9c hat. Licht, welches von einem Partikel 11 im Messbereich 6 auf der Oberfläche 1 in Richtung der Lichtleitfasern 9a, 9b, 9c gestreut wird, trifft auf die Lichtleitfasern 9a, 9b, 9c an deren Eingangsstirnfläche 12a, 12b, 12c. Wenn das vom Partikel 11 reflektierte Licht hinreichend steil, also innerhalb des einen Aperturwinkels der Lichtleitfasern, auf die Eingangsstirnflächen 12a, 12b, 12c trifft, wird es von den Lichtleitfasern 9a, 9b, 9c geleitet. Um eine größere Oberfläche 1 abzutasten, kann die Oberfläche 1 gegenüber dem Kollektor 7 in einer Richtung 10 am Kollektor 7 vorbeibewegt werden. Auf diese Weise wird die Oberfläche 1 abgetastet, wobei sich der Messbereich 6 auf der Oberfläche verlagert.

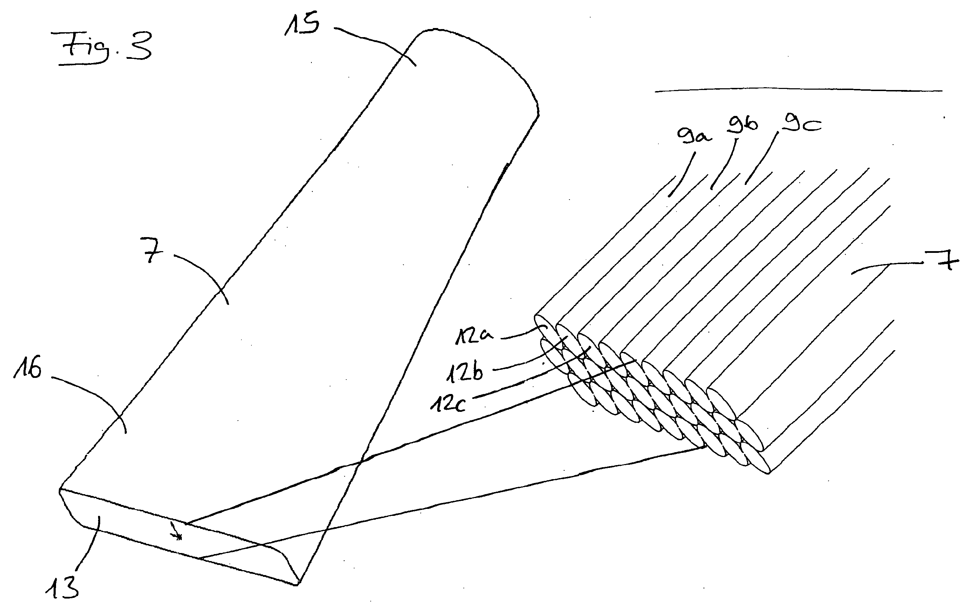

Figur 3 zeigt einen Kollektor, wie er im erfindungsgemäßen Partikeldetektor zum Einsatz kommen kann. Der Kollektor 7 weist hierbei eine gegenüber der zu untersuchenden Oberfläche 1 anordenbaren Stirnfläche 13 sowie eine Stirnfläche 14 auf, an welcher ein Detektor 8 angeschlossen werden kann. Die Stirnfläche 13 ist im rechten Teilbild in einer Vergrößerung gezeigt. Zu erkennen ist, dass der Kollektor 7 eine Vielzahl von gebündelten Lichtleitfasern 9a, 9b, 9c aufweist, die im Bereich hinter den Eingangsstirnflächen 9a, 9b, 9c parallel zueinander angeordnet sind und unmittelbar aneinandergrenzen. Die Stirnfläche des Kollektors 13 hat hierbei die Form eines rechteckigen Streifens. Die Glasfasern 9a, 9b, 9c sind nun im Kollektor so geführt, dass die andere Stirnfläche 14 des Kollektors kreisförmig ist. Hierzu wird der rechteckige Querschnitt im Bereich 16 kontinuierlich in einen kreisförmigen Querschnitt im Bereich 15 überführt, indem die Glasfasern 9a, 9b, 9c entsprechend geführt werden.

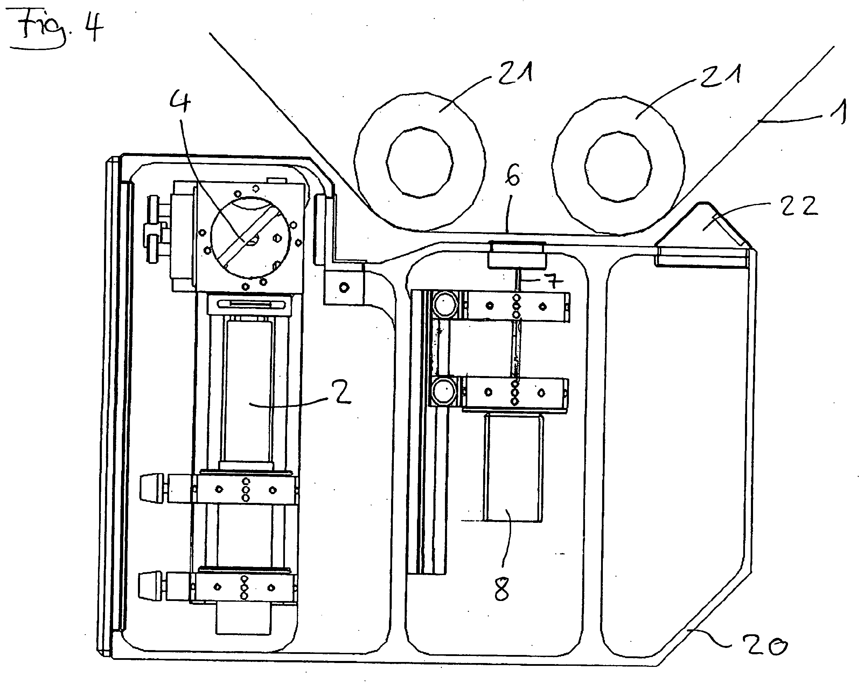

Figur 4 zeigt nun einen möglichen Aufbau eines erfindungsgemäßen Partikeldetektors. Hierbei sind eine Lichtquelle 2 und ein Detektor 8 in einem Gehäuse 20 untergebracht und entsprechend Figur 1 angeordnet. Licht aus der Lichtquelle 2 wird über einen Umlenkspiegel 4 in einen Messbereich 6 auf einer zu vermessenden Oberfläche 1 umgelenkt, welche über zwei Rollen 21 an der Messzone 6 vorbeibewegt wird. Durch Partikel reflektiertes Licht wird durch den Kollektor 7 aufgenommen und zum Photomultiplier 8 geleitet.

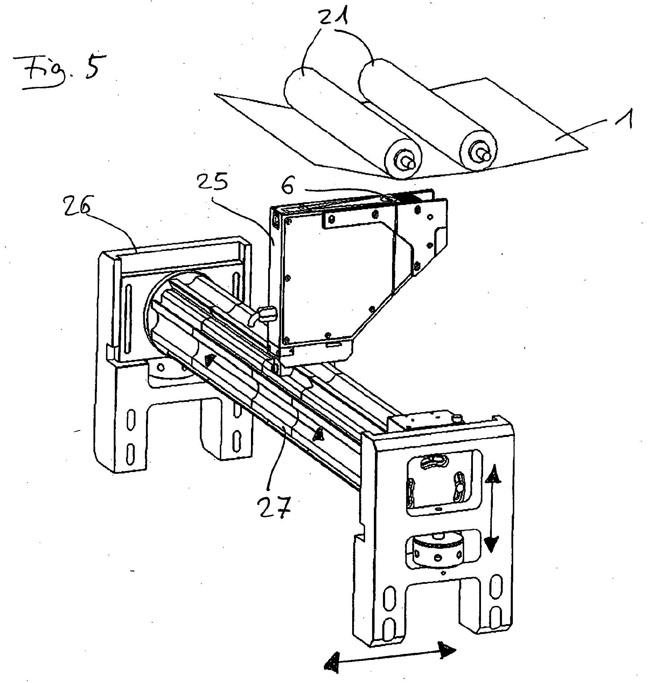

Figur 5 zeigt eine Anordnung, mit welcher mit dem erfindungsgemäßen Partikeldetektor eine Oberfläche 1 auf Partikelverschmutzung scanbar ist. Dazu wird die Oberfläche 1 über Umlenkrollen 21 am Messbereich 6 vorbeigeleitet und gleichzeitig oder abwechselnd zur Bewegung der Oberfläche 1 der Partikeldetektor 25 in Richtung senkrecht zur Bewegungsrichtung der Oberfläche 1 über die Rollen 21 verschoben. Auf diese Weise ist die Oberfläche 1 zeilenweise scanbar. Die seitliche Verschiebung des Partikeldetektors wird über eine Positionierungsvorrichtung 26 bewirkt, welche eine Schiene 27 aufweist, auf welcher der Partikelmesskopf 25 untergebracht ist. Die Schiene 27 ist also in Richtung der seitlichen Bewegung angeordnet, d.h. senkrecht zur Bewegungsrichtung der Oberfläche 1 über die Rollen 21.

## Patentansprüche

1. Partikeldetektor zur Detektion von Partikeln auf einer Oberfläche (1) mit zumindest einer Lichtquelle (2),
zumindest einem Detektor 8) zur Detektion von an den Partikeln gestreutem Licht sowie zumindest einem Lichtkollektor (7), der eine Vielzahl von Lichtleitfasern (9a, 9b, 9c) aufweist,
wobei
je Lichtleitfaser eine Eingangsstirnfläche (12a, 12b, 12c) der entsprechenden Lichtleitfaser der Oberfläche so gegenüber anordenbar ist, dass Licht aus Richtung der Oberfläche auf die entsprechende Eingangsstirnfläche fallen kann, und
die jeweils andere Stirnfläche der Lichtleitfasern so an zumindest einen der zumindest einen Detektoren grenzt, dass aus ihr austretendes Licht mit dem Detektor (8) detektierbar ist, und wobei
das durch die Lichtquelle (2) erzeugte Licht in einem solchen Winkel zur Oberfläche über die Oberfläche strahlbar ist, dass durch die Oberfläche selbst reflektiertes Licht auf die Eingangsstirnflächen der Lichtleitfasern nicht einfällt oder mit einem Winkel einfällt, der außerhalb eines Akzeptanzwinkels der Lichtleitfasern liegt,
**dadurch gekennzeichnet, dass** mit der Lichtquelle ein rechteckiges Strahlbündel erzeugbar ist.

2. Partikeldetektor nach dem vorhergehenden Anspruch, **dadurch gekennzeichnet, dass** die Eingangsstirnflächen der Lichtleitfasern auf einer Fläche und/oder in einer Ebene angeordnet sind.

3. Partikeldetektor nach einem der vorhergehenden Ansprüche, **dadurch gekennzeichnet, dass** die Eingangsstirnflächen parallel zur Oberfläche anordenbar sind.

4. Partikeldetektor nach einem der vorhergehenden Ansprüche, **dadurch gekennzeichnet, dass** die Eingangsstirnflächen in einem Rechteck und/oder einem Streifen angeordnet sind.

5. Partikeldetektor nach einem der vorhergehenden Ansprüche, **dadurch gekennzeichnet, dass** das Licht so über die Oberfläche strahlbar ist, dass es mit der Oberfläche einen Winkel von ≤ 15°, bevorzugt ≤ 10°, besonders bevorzugt ≤ 5°, besonders bevorzugt gleich 0° einschließt.

6. Partikeldetektor nach einem der vorhergehenden Ansprüche, **dadurch gekennzeichnet, dass** die Lichtquelle ein Zeilenlasersystem aufweist oder ist und/oder dadurch, dass die Lichtquelle Licht erzeugt, das zumindest in einer Richtung parallel zur Oberfläche divergent ist.

7. Partikeldetektor nach einem der vorhergehenden Ansprüche **gekennzeichnet durch** zumindest einen Umlenkspiegel, über welchen **durch** die Lichtquelle erzeugtes Licht über die Oberfläche strahlbar ist.

8. Partikeldetektor nach einem der vorhergehenden Ansprüche, **dadurch gekennzeichnet, dass** die Lichtleitfasern im Bereich hinter den Eingangsstirnflächen parallel zueinander verlaufen.

9. Partikeldetektor nach einem der vorhergehenden Ansprüche, **dadurch gekennzeichnet, dass** die Anzahl der Eingangsstirnflächen pro Fläche gleich oder ungefähr gleich einer Anzahl von zu detektierenden Partikeln pro Fläche ist.

10. Partikeldetektor nach einem der vorhergehenden Ansprüche, **dadurch gekennzeichnet, dass** die Lichtleitfasern einen Akzeptanzwinkel von ≤ 90°, vorzugsweise ≤ 50°, besonders bevorzugt ≤ 30°, besonders bevorzug ≤ 20° haben.

11. Partikeldetektor nach einem der vorhergehenden Ansprüche, **dadurch gekennzeichnet, dass** der Partikeldetektor in zumindest einer Richtung parallel zur Oberfläche relativ zur Oberfläche bewegbar ist, wobei bevorzugt eine Anordnung der Eingangsstirnflächen der Lichtleitfasern in Richtung der Bewegung schmaler ist als in Richtung senkrecht zur Bewegung.

12. Partikeldetektor nach einem der vorhergehenden Ansprüche, **dadurch gekennzeichnet, dass** die Lichtquelle Licht erzeugt, dessen Hauptstrahlrichtung in etwa senkrecht zu einer Ebene steht, in welcher Eingangsstirnflächen angeordnet sind und dass zwischen der Lichtquelle und der Oberfläche zumindest ein Spiegel so angeordnet ist, dass das Licht mittels des Spiegels über die Oberfläche strahlbar ist.

13. Partikeldetektor nach einem der vorhergehenden Ansprüche, **dadurch gekennzeichnet, dass** die Lichtleitfasern zu einem Bündel zusammengefasst sind und/oder unmittelbar aneinander grenzen, wobei bevorzugt das Bündel auf seiner gegenüber der Oberfläche anordenbaren Seite einen rechteckigen Querschnitt hat und/oder bevorzugt auf seiner am Detektor angeordneten Seite einen kreisförmigen Querschnitt hat.

14. Verfahren zur Detektion von Partikeln auf einer Oberfläche (1), wobei Licht in einem solchen Winkel zur Oberfläche über die Oberfläche gestrahlt wird, dass durch die Oberfläche selbst reflektiertes Licht auf der Oberfläche gegenüber angeordnete Eingangsstirnflächen von Lichtleitfasern (9a, 9b, 9c) eines Partikeldetektors nicht einfällt oder mit einem Winkel einfällt, der außerhalb eines Akzeptanzwinkels der Lichtleitfasern liegt, und dass durch die Eingangsstirnflächen (12a, 12b, 12c) in die Lichtleitfasern eintretendes Licht mit einem Detektor (8) detektiert wird und dadurch Partikel auf der Oberfläche detektiert werden, wobei bevorzugt ein Partikeldetektor nach einem der Ansprüche 1 bis 13 verwendet wird.

## Claims

1. Particle detector for the detection of particles on a surface (1), having
at least one light source (2),
at least one detector (8) for the detection of light scattered on the particles, as well as
at least one light collector (7) which has a plurality of light conducting fibres (9a, 9b, 9c),
wherein
per light conducting fibre one input front surface (12a, 12b, 12c) of the corresponding light conducting fibre can be arranged opposite of the surface such that light can fall onto the corresponding input front surface from the direction of the surface, and
the respective other front surface of the light conducting fibres are adjacent to at least one of the at least one detectors such that light output from it is able to be detected using the detector (8), and wherein the light generated by the light source (2) is able to be radiated over the surface at such an angle to the surface that light reflected by the surface itself does not strike the input front surfaces of the light conducting fibres or strikes them at an angle which lies outside an angle of acceptance of the light conducting fibres, **characterised in that** a rectangular beam bundle is able to be generated using the light source.

2. Particle detector according to the preceding claim, **characterised in that** the input front surfaces of the light conducting fibres are arranged on a surface and/or in a plane.

3. Particle detector according to one of the preceding claims, **characterised in that** the input front surfaces are able to be arranged parallel to the surface.

4. Particle detector according to one of the preceding claims, **characterised in that** the input front surfaces are arranged in a rectangle and/or a strip.

5. Particle detector according to one of the preceding claims, **characterised in that** the light is able to be radiated over the surface such that it encloses an angle with the surface of ≤15°, preferably ≤10°, particularly preferably ≤5°, particularly preferably equal to 0°.

6. Particle detector according to one of the preceding claims, **characterised in that** the light source has or is a line laser system and/or **in that** the light source generates light which is divergent at least in a direction parallel to the surface.

7. Particle detector according to one of the preceding claims, **characterised by** at least one deflection mirror, via which light generated by the light source is able to be radiated over the surface.

8. Particle detector according to one of the preceding claims, **characterised in that** the light conducting fibres run in parallel to one another in the region behind the input front surfaces.

9. Particle detector according to one of the preceding claims, **characterised in that** the number of input front surfaces per area is equal to or approximately equal to a number of particles to be detected per area.

10. Particle detector according to one of the preceding claims, **characterised in that** the light conducting fibres have an angle of acceptance of ≤90°, preferably ≤50°, particularly preferably ≤30°, particular preferably ≤20°.

11. Particle detector according to one of the preceding claims, **characterised in that** the particle detector can be moved relative to the surface in at least one direction parallel to the surface, wherein an arrangement of the input front surfaces of the light conducting fibres is preferably narrower in the direction of movement than in the direction perpendicular to the movement.

12. Particle detector according to one of the preceding claims, **characterised in that** the light source generates light, the main radiation direction of which is approximately perpendicular to a plane in which input front surfaces are arranged, and that at least one mirror is arranged between the light source and the surface, such that the light is able to be radiated over the surface by means of the mirror.

13. Particle detector according to one of the preceding claims, **characterised in that** the light conducting fibres are combined to form a bundle and/or are directly adjacent to one another, wherein the bundle preferably has a rectangular cross-section on its side which is able to be arranged opposite the surface and/or preferably has a circular cross-section on its side arranged on the detector.

14. Method for the detection of particles on a surface (1), wherein light is radiated over the surface at such an angle to the surface that light reflected by the surface itself does not strike the input front surfaces of light conducting fibres (9a, 9b, 9c) of a particle detector, said input front surfaces being arranged opposite the surface, or strikes them at an angle which lies outside an angle of acceptance of the light conducting fibres, and that light entering the light conducting fibres through the input front surfaces (12a, 12b, 12c) is detected using a detector (8) and particles are thereby detected on the surface, wherein a particle detector according to one of claims 1 to 13 is preferably used.

## Revendications

1. Détecteur de particules pour la détection de particules sur une surface (1) avec au moins une source de lumière (2),
au moins un détecteur (8) pour la détection de la lumière diffusée au niveau des particules ainsi que
au moins un collecteur de lumière (7) qui comprend une pluralité de fibres optiques (9a, 9b, 9c),
pour chaque fibre optique, une face frontale d'entrée (12a, 12b, 12c) de la fibre optique correspondante peut être disposée en face de la surface de façon à ce que la lumière puisse arriver de la surface vers la face frontale d'entrée correspondante, et
l'autre face frontale des fibres optiques étant adjacente à au moins un des au moins un détecteur, de façon à ce que la lumière qui en sort puisse être détectée avec le détecteur (8) et
la lumière générée par la source de lumière (2) peut être émise au-dessus de la surface avec un angle par rapport à la surface de façon à ce que la lumière réfléchie par la surface elle-même n'arrive pas sur les faces frontales d'entrée des fibres optiques ou arrive avec un angle qui se trouve hors de l'angle de capture des fibres optiques,
**caractérisé en ce que**, avec la source de lumière, un faisceau rectangulaire peut être généré.

2. Détecteur de particules selon la revendication précédente, **caractérisé en ce que** les faces frontales d'entrée des fibres optiques sont disposées sur une face et/ou dans un plan.

3. Détecteur de particules selon l'une des revendications précédentes, **caractérisé en ce que** les faces frontales d'entrée peuvent être disposées parallèlement à la surface.

4. Détecteur de particules selon l'une des revendications précédentes, **caractérisé en ce que** les faces frontales d'entrée sont disposées dans un rectangle et/ou une bande.

5. Détecteur de particules selon l'une des revendications précédentes, **caractérisé en ce que** la lumière peut être émise au-dessus de la surface de façon à ce qu'elle forme, avec la surface, un angle ≤ 15°, de préférence ≤ 10°, plus particulièrement de préférence ≤ 5°, plus particulièrement de préférence égal à 0°.

6. Détecteur de particules selon l'une des revendications précédentes, **caractérisé en ce que** la source de lumière comprend ou est un système de laser à lignes et/ou **en ce que** la source de lumière génère une lumière qui est divergente au moins dans une direction parallèle à la surface.

7. Détecteur de particules selon l'une des revendications précédentes, **caractérisé par** au moins un miroir de déviation permettant d'émettre la lumière générée par la source de lumière au-dessus de la surface.

8. Détecteur de particules selon l'une des revendications précédentes, **caractérisé en ce que** les fibres optiques s'étendent parallèlement entre elles dans la zone derrière les faces frontales d'entrée.

9. Détecteur de particules selon l'une des revendications précédentes, **caractérisé en ce que** le nombre de faces frontales d'entrée par face est égal ou approximativement égal à un nombre de particules à détecter par face.

10. Détecteur de particules selon l'une des revendications précédentes, **caractérisé en ce que** les fibres optiques présentent un angle de capture ≤ 90°, de préférence ≤ 50°, plus particulièrement de préférence ≤ 30°, plus particulièrement de préférence ≤ 20°.

11. Détecteur de particules selon l'une des revendications précédentes, **caractérisé en ce que** le détecteur de particules est mobile par rapport à la surface dans au moins une direction parallèle à la surface, de préférence une disposition des faces frontales d'entrée des fibres optiques en direction du mouvement étant plus étroite que dans la direction perpendiculaire au mouvement.

12. Détecteur de particules selon l'une des revendications précédentes, **caractérisé en ce que** la source de lumière génère une lumière dont la direction principale d'émission est approximativement perpendiculaire à un plan dans lequel se trouvent les faces frontales d'entrée et **en ce que**, entre la source de lumière et la surface, un miroir est disposé de façon à ce que la lumière puisse être émise à l'aide du miroir au-dessus de la surface.

13. Détecteur de particules selon l'une des revendications précédentes, **caractérisé en ce que** les fibres optiques sont regroupées en un faisceau et/ou sont directement adjacentes entre elles, de préférence le faisceau présente, sur son côté pouvant être disposé en face de la surface, une section transversale rectangulaire et/ou de préférence sur son côté disposé sur le détecteur, une section transversale circulaire.

14. Procédé de détection de particules sur une surface (1), une lumière étant émise au-dessus de la surface avec un angle par rapport à la surface, de façon à ce que la lumière réfléchie par la surface elle-même n'arrive pas sur les faces frontales d'entrée des fibres optiques (9a, 9b, 9c) d'un détecteur, disposées en face de la surface ou arrive avec un angle qui se trouve hors d'un angle de capture des fibres optiques et en ce que la lumière entrant par les faces frontales d'entrée (12a, 12b, 12c) des fibres optiques est détectée dans un détecteur (8) et les particules se trouvant sur la surface sont ainsi détectées, de préférence un détecteur de particules selon l'une des revendications 1 à 13 étant utilisé.
